# EUROPÄISCHE PATENTSCHRIFT

(11) **EP 2 337 419 B1**
(45) Veröffentlichungstag und Bekanntmachung des Hinweises auf die Patenterteilung: **19.08.2015**
(21) Anmeldenummer: 10194331.4
(22) Anmeldetag: 09.12.2010
(51) Int. Cl.: H04W 76/02, H04M 15/00

(54) **Verfahren und Netzeinrichtung zum Freischalten einer Datenverbindung über ein Mobilfunknetz in ein Datennetz**
Method and network appliance for unlocking a data connection over a mobile radio network into a data network
Procédé et dispositif de réseau pour l'autorisation d'une connexion de données via un réseau radio mobile vers un réseau de données

(30) Priorität: 15.12.2009 DE 102009058193
(43) Veröffentlichungstag der Anmeldung: 22.06.2011
(73) Patentinhaber: Vodafone Holding GmbH, 40213 Düsseldorf (DE)
(72) Erfinder: Grosche, Uwe, 41462 Neuss (DE); Monse-Feldhoff, Michael, 44369 Dortmund (DE)
(74) Vertreter: Jostarndt, Hans-Dieter

(56) Entgegenhaltungen:
- WO-A1-94/28670
- WO-A1-2008/086888
- DE-A1- 10 114 964

## Beschreibung

Die Erfindung bezieht sich auf einen Datendienst für den Aufbau einer Datenverbindung über wenigstens ein Mobilfunknetz in ein Datennetz. Insbesondere betrifft die Erfindung ein Verfahren und eine Netzwerkeinrichtung zum Freischalten einer Datenverbindung von einem mobilen Endgerät über wenigstens ein Mobilfunknetz in ein Datennetz.

In Mobilfunknetzen sind Datendienste bekannt, die es ermöglichen, eine paketvermittelte Datenverbindung zwischen einem Endgerät, das mit einem Mobilfunknetz verbunden ist, und einem mit dem Mobilfunknetz gekoppelten Datennetz, wie beispielsweise dem Internet, herzustellen. Derartige Dienste nutzen in der Regel eine Paketdatenverbindung, die über einen Paketdatendienst wie beispielsweise GPRS (General Radio Packet Service), EGPRS (Enhanced GPRS), Paketdatenübertragung im UMTS (Universal Mobile Telecommunications System) oder HSDPA (High Speed Downlink Packet Access) bzw. HSPA (High Speed Packet Access) hergestellt wird.

Zunehmend sind Datendienste der zuvor genannten Art auch beim sogenannten Roaming nutzbar, d.h. wenn sich ein Teilnehmer nicht in sein Heimatnetz einbucht, sondern in ein anderes, sogenanntes besuchtes Netz. Um dem Teilnehmer dabei bestehende Dienste des Heimatnetzes verfügbar machen zu können, kann der Zugriff auf Datennetze beim Roaming als ein sogenannter Home Access konfiguriert sein. Dies bedeutet, dass der Zugriff auf das Datennetz über das Heimatnetz des Teilnehmers vorgenommen wird. Hierzu wird eine Datenverbindung von einer Vermittlungseinheit des besuchten Mobilfunk-netzes an das Heimatnetz weitergeleitet, welches die Verbindung zu dem Datennetz herstellt.

Die Bedingungen für einen Zugriff auf den Datendienst, insbesondere die für die Dienstnutzung anfallenden Gebühren, richten sich in der Regel nach dem Mobilfunknetz, von dem aus der Teilnehmer auf den Datendienst zugreift. So fallen bei einem Zugriff auf den Datendienst aus einem besuchten Mobilfunknetz im Ausland in der Regel höhere Gebühren an als bei einem Zugriff aus einem besuchten Mobilfunknetz im Inland oder dem Heimatnetz. Für den Teilnehmer sind die Bedingungen für die Nutzung des Datendienstes oftmals nur anhand von Gebührenverzeichnissen seines Mobilfunkanbieters ersichtlich. Dies ist für den Nutzer unkomfortabel, da ihm ein solches Gebührenverzeichnis oftmals nicht zur Verfügung steht und die Interpretation des Verzeichnisses aufgrund von differenzierten Gebührenstrukturen Schwierigkeiten bereiten kann. Für den Mobilfunkanbieter ist damit das Problem verbunden, dass Teilnehmer Datendienste häufig nicht nutzen, weil sie hohe Gebühren fürchten.

Die WO 2008/086888 A1 offenbart Verfahren und Vorrichtungen zur Belastung von Kosten an einen Benutzer für den Zugriff auf einen Dienst über ein Kommunikationsnetz.

Daher ist eine Aufgabe der vorliegenden Erfindung, die Nutzung eines Datendienstes zum Zugriff auf ein Datennetzwerk über ein Mobilfunknetzwerk für einen Mobilfunkteilnehmer zu vereinfachen.

Die Aufgabe wird gelöst durch ein Verfahren mit den Merkmalen des Patentanspruchs 1 und eine Netzeinrichtung mit den Merkmalen des Patentanspruchs 9. Ausgestaltungen des Verfahrens und der Netzeinrichtung sind in den abhängigen Ansprüche angegeben.

Gemäß einem ersten Aspekt der Erfindung wird damit ein Verfahren zum Freischalten einer Datenverbindung von einem mobilen Endgerät über wenigstens ein Mobilfunknetz in ein Datennetz vorgeschlagen. Bei dem Verfahren wird eine Verbindungsanforderung des Endgeräts an eine Vermittlungseinheit weitergeleitet, wobei dem Endgerät ein Heimatnetz zugeordnet ist und sich die Vermittlungseinheit in dem Heimatnetz befindet, wobei die Verbindungsanforderung von einer Eingangsvermittlungseinheit eines besuchten Mobilfunknetzes an die Vermittlungseinheit des Heimatnetzes weitergeleitet wird, aufgrund des Empfangs der Verbindungsanforderung in der Vermittlungseinheit werden Freischaltbedingungen für eine Freischaltung der Datenverbindung in Abhängigkeit von einem Merkmal der Eingangsvermittlungseinheit bestimmt, und es wird eine Nachricht mit den Freischaltbedingungen unabhängig von der aufzubauenden Datenverbindung an das Endgerät gesendet.

Die Freischaltbedingungen können zusätzlich aufgrund von Vertragsbedingungen zwischen dem Nutzer und einem Betreiber des Heimatnetzes bestimmt werden.

Gemäß einem weiteren Aspekt der Erfindung wird eine Netzeinrichtung zum Freischalten einer Datenverbindung von einem mobilen Endgerät über wenigstens ein Mobilfunknetz in ein Datennetz bereitgestellt. Die Netzeinrichtung umfasst eine Vermittlungseinheit, in der eine Verbindungsanforderung des Endgeräts empfangbar ist, wobei dem Endgerät ein Heimatnetz zugeordnet ist und sich die Vermittlungseinheit in dem Heimatnetz befindet, wobei die Verbindungsanforderung von einer Eingangsvermittlungseinheit eines besuchten Mobilfunknetzes an die Vermittlungseinheit des Heimatnetzes weitergeleitet wird, wobei die Netzeinrichtung eine der Vermittlungseinheit zugeordnete Steueranordnung umfasst, die dazu ausgestaltet ist, aufgrund des Empfangs der Verbindungsanforderung in der Vermittlungseinheit Freischaltbedingungen für eine Freischaltung der Datenverbindung in Abhängigkeit von einem Merkmal der Eingangsvermittlungseinheit zu bestimmen und eine von der aufzubauenden Datenverbindung unabhängige Übermittlung einer Nachricht mit den Freischaltbedingungen an das Endgerät zu veranlassen.

Bei dem Mobilfunknetz, mit dem das mobile Endgerät verbunden ist, kann es sich um das Heimatnetz des Endgeräts handeln. Gleichfalls kann das Endgerät jedoch auch mit einem anderen, besuchten Mobilfunknetz verbunden sein. Die freizuschaltende Datenverbindung in das Datennetz ist vorzugsweise als eine paketvermittelnde Datenverbindung ausgestaltet und kann insbesondere über einen Paketdatendienst des Mobilfunknetzes hergestellt werden.

Die Erfindung sieht vor, dass dem Nutzer des mobilen Endgeräts Freischaltbedingungen vor der Freischaltung der Datenverbindung angezeigt werden können, so dass er über die Freischaltbedingungen informiert ist. Dabei besteht ein Vorteil der Erfindung darin, dass die Freischaltbedingungen anhand einer Nachricht bereitgestellt werden, die unabhängig von der aufzubauenden Datenverbindung an das Endgerät übermittelt wird. Dies bedeutet, dass die aufzubauende Datenverbindung nicht für den Versand der Nachricht verwendet wird. Insbesondere ist vorzugsweise vorgesehen, dass die Nachricht unabhängig von einem Routingkontext übermittelt wird, der zur Herstellung der Datenverbindung aufgebaut wird, um Datenpakete an das Endgeräte weiterzuleiten.

Die von der Datenverbindung bzw. dem Routingkontext unabhängige Übermittlung der Nachricht hat den Vorteil, dass die Datenverbindung bzw. der Routingkontext nicht bereits zur Freischaltung der Datenverbindung aufgebaut oder genutzt zu werden braucht. Damit wird insbesondere vermieden, dass bereits für die Freischaltung der Datenverbindung Gebühren für die Nutzung der Datenverbindung anfallen, die insbesondere beim Roaming in der Regel relativ hoch sind. Insoweit lässt sich die Erfindung auch im Falle eines Roamings des Teilnehmers vorteilhaft nutzen.

In einer Ausgestaltung des Verfahrens und der Netzeinrichtung ist zudem vorgesehen, dass die Freischaltung der Datenverbindung erfolgt, nachdem eine von dem Endgerät gesendete Antwortnachricht empfangen wird. Damit hat der Nutzer des Endgeräts durch das Absenden einer Antwortnachricht die Möglichkeit, die Freischaltung der Datenverbindung in einfacher Weise zu bewirken.

Eine weitere Ausgestaltung des Verfahrens und der Netzeinrichtung sieht vor, dass die Nachricht und/oder die Antwortnachricht über einen von dem Mobilfunknetz bereitgestellten Nachrichtendienst, insbesondere einen Short Message Service (SMS), übermittelt werden. Nutzbare Nachrichtendienste, wie etwa der SMS, werden in der Regel von den bestehenden Mobilfunknetzen und von den verwendeten mobilen Endgeräten unterstützt, so dass eine problemlose Übermittlung der Nachricht und/oder der Antwortnachricht auch über besuchte Mobilfunknetze möglich ist, und eine problemlose Verarbeitung der Nachricht im Endgerät gewährleistet wird. Darüber hinaus braucht ein Endgerät insbesondere nicht über eine spezielle Software zu verfügen, um die Datenverbindung in das Datennetz freischalten zu können, sondern es kann in der Regel eine standardmäßig vorgesehene Funktionalität des Endgeräts für den Empfang und den Versand von Nachrichten über den Nachrichtendienst genutzt werden.

Eine Weiterbildung des Verfahrens und der Netzeinrichtung beinhaltet, dass die Verbindungsanforderung unter Angabe eines Ziels in dem Datennetz erfolgt und aufgrund der Freischaltung eine Verbindung von dem Endgerät zu dem Ziel hergestellt wird. Bei dem Ziel im Datennetz kann es sich beispielsweise um eine Webseite oder ein E-Mail-Postfach in dem Datennetz handeln. Dadurch, dass das Ziel bereits in der Verbindungsanforderung spezifiziert wird, braucht von dem Endgerät nach Freischaltung der Datenverbindung nicht nochmals eine Anforderung gesendet zu werden, um auf das gewünschte Ziel zuzugreifen.

Wie bereits erwähnt, ist dem Endgerät ein Heimatnetz zugeordnet. Diesbezüglich ist vorgesehen, dass sich die Vermittlungseinheit in dem Heimatnetz befindet. Vorteilhaft wird hierdurch im Roamingfall ein Home Access ermöglicht, bzw. es wird bei einem vorgesehenen Home Access eine einfache und kostengünstige Möglichkeit zur Freischaltung einer Datenverbindung in das Datennetz und eine Bereitstellung von Freigabebedingungen bereitgestellt.

Das Endgerät kann mit dem Heimatnetz verbunden sein oder mit einem besuchten Mobilfunknetz, von dem die Verbindungsanforderung an das Heimatnetz weitergeleitet wird. Die Freischaltbedingungen werden in Abhängigkeit von dem Mobilfunknetz ermittel, in dem die Verbindungsanforderung des Endgeräts zuerst empfangen wird. Hierdurch kann hinsichtlich der Freischaltbedingungen insbesondere zwischen einem Zugang über das Heimatnetz und einem Roaming des Endgeräts unterschieden werden.

Die Verbindungsanforderung wird dabei von einer Eingangsvermittlungseinheit des Mobilfunknetzes an die Vermittlungseinheit des Heimnetzes weitergeleitet wird und die Freischaltbedingungen werden in Abhängigkeit von einem Merkmal der Eingangsvermittlungseinheit bestimmt. Die Eingangsvermittlungseinheit befindet sich dabei in dem besuchten Mobilfunknetz, mit dem das mobile Endgerät verbunden ist. Anhand des Merkmals der Eingangsvermittlungseinheit kann dieses Mobilfunknetz bestimmt werden, so dass die Freischaltbedingungen von dem Mobilfunknetz abhängig gemacht werden können, mit dem das Endgerät verbunden ist.

Ferner beinhaltet eine Ausgestaltung des Verfahrens und der Netzeinrichtung, dass geprüft wird, ob das Endgerät mit einem besuchten Mobilfunknetz verbunden ist, und die Nachricht mit den Freischaltbedingungen nur dann gesendet wird, wenn festgestellt wird, dass das Endgerät mit einem besuchten Mobilfunknetz verbunden ist. In dieser Ausgestaltung ist die Nachricht nur dann vorgesehen, wenn das Endgerät nicht mit dem Heimatnetz verbunden ist, sondern mit einem besuchten Mobilfunknetz (d.h. im Roamingfall). Aufgrund der höheren Gebühren ist es besonders im Roamingfall vorteilhaft, dem Teilnehmer die Freischaltbedingungen anhand der Nachricht vor Freischaltung der Datenverbindung zu übermitteln. Wenn das Endgerät hingegen direkt mit dem Heimat netz verbunden ist, so dass die Kosten für die Datenverbindung üblicherweise geringer sind, kann vorgesehen sein, die Freischaltung auf andere Weise vorzunehmen. Beispielsweise kann die Freischaltung (automatisch) aufgrund des Empfangs der Verbindungsanforderung in der Vermittlungseinheit erfolgen.

Darüber hinaus ist eine Weiterbildung des Verfahrens und der Netzeinrichtung dadurch gekennzeichnet, dass die in der Nachricht angegebenen Freischaltbedingungen wenigstens eine Freischaltdauer und/oder ein Freischaltdatenvolumen umfassen. Die Freischaltdauer entspricht vorzugsweise einer Dauer für die Nutzung der Datenverbindung in das Datennetz nach der Freischaltung und das Freischaltdatenvolumen entspricht einem Datenvolumen, das nach Freischaltung der Datenverbindung über diese übertragen werden kann. Die Freischaltbedingungen können eine Freischaltdauer und/oder ein Freischaltdatenvolumen umfassen; gleichfalls können dem Nutzer mit der Nachricht jedoch auch mehrere Freischaltdauern und/oder Freischaltdatenvolumina zur Auswahl angeboten werden.

Zudem sieht eine Ausführungsform des Verfahrens und der Netzeinrichtung vor, dass die Antwortnachricht eine Bestätigung einer Freischaltdauer und/oder eines Freischaltdatenvolumens umfasst und die Freischaltung nach Maßgabe dieser Freischaltdauer und/oder dieses Freischaltdatenvolumens vorgenommen wird. Dies bedeutet insbesondere, dass die Datenverbindung nach Ablauf der bestätigten Freischaltdauer oder nachdem ein bestätigtes Freischaltdatenvolumen über die freigeschaltete Datenverbindung übertragen worden ist, für das Endgerät wieder gesperrt wird. Wenn dem Nutzer mehrere Freischaltdauern und/oder Freischaltdatenvolumina zur Auswahl angeboten werden, erfolgt die Bestätigung für eine von dem Nutzer ausgewählte Freischaltdauer oder ein von dem Nutzer ausgewähltes Datenvolumen.

Die zuvor genannten und weitere Vorteile, Besonderheiten und zweckmäßige Weiterbildungen der Erfindung werden auch anhand der Ausführungsbeispiele deutlich, die nachfolgend unter Bezugnahme auf die Figuren beschrieben werden.

Von den Figuren zeigt:
- Fig. 1: eine schematisch Darstellung eines Netzwerksystem mit zwei Mobilfunknetzen und

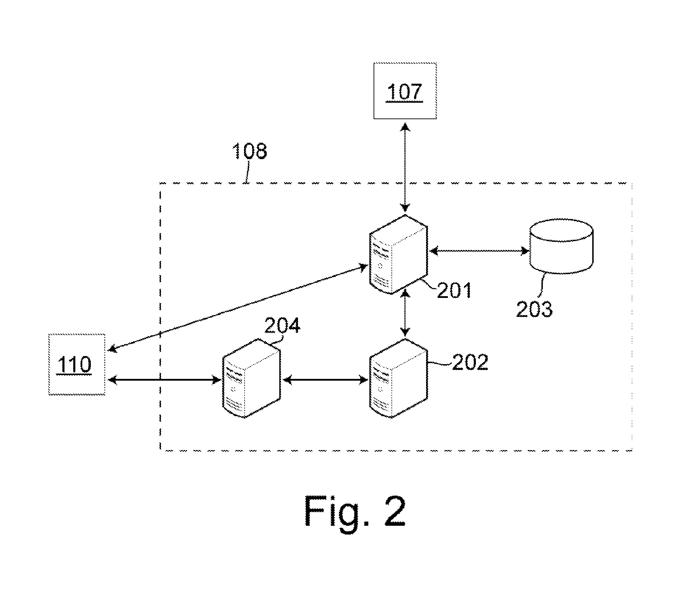

- Fig. 2: eine schematische Darstellung einer Steueranordnung, die einer Vermittlungseinheit eines Mobilfunknetzes zugeordnet ist.

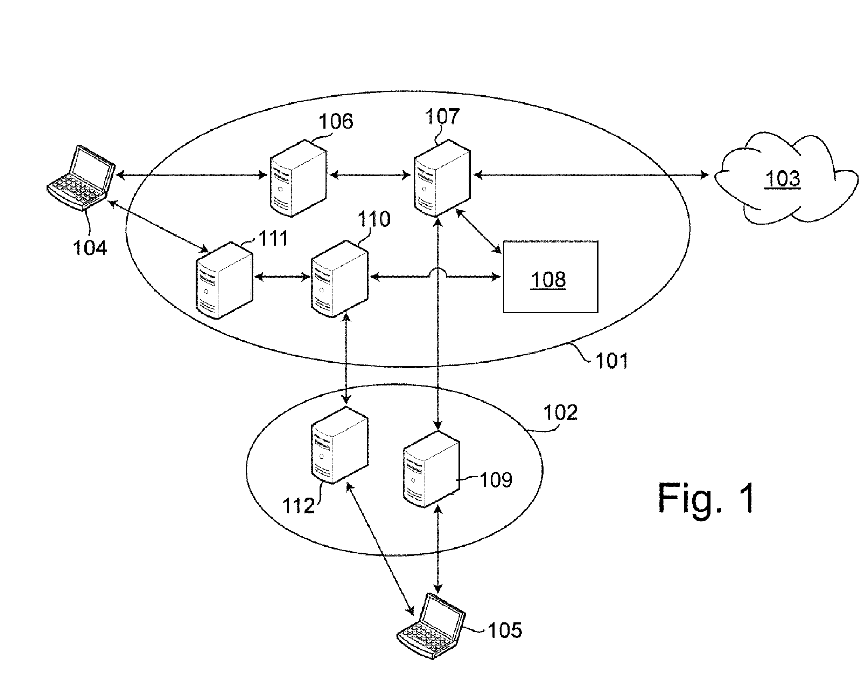

Figur 1 zeigt in einer schematischen Darstellung ausgewählte Komponenten eines Netzsystems mit einem ersten Mobilfunknetz 101 und einem zweiten Mobilfunknetz 102. Das Mobilfunknetz 101 ist mit einem Datennetz 103 verbunden, bei dem es sich beispielsweise um das Internet oder ein anderes öffentliches oder privates Datennetz 103 handeln kann. Mobile Endgeräte 104, 105 werden mit den Mobilfunknetzen 101, 102 drahtlos über ein in der Figur nicht dargestelltes funkbasiertes Zugangsnetz verbunden. Die Endgeräte 104, 105 können beispielsweise als Mobiltelefon, PDA (Personal Data Assistent), Notebook-Computer oder dergleichen ausgestaltet sein.

In dem dargestellten Netzwerksystem wird ein paketvermittelnder Datendienst bereitgestellt, der es ermöglicht, Datenpakete zwischen einem Endgerät 104, 105, das mit einem Mobilfunknetz 101, 102 verbunden ist, und einem in der Figur nicht dargestellten Server des Datennetzes 103 auszutauschen. Der Datenaustausch zwischen dem Endgerät 104, 105 und dem Server basiert vorzugsweise auf dem Internet Protocol (IP) und umfasst beispielsweise den Aufruf und die Bereitstellung von Webseiten, die mittels einer Browsereinrichtung des Endgeräts 104, 105 angezeigt werden können, und das Abrufen und/oder Versenden von E-Mails mithilfe eines E-Mail-Clients des Endgeräts 104, 105. Der Datendienst zur Herstellung der Datenverbindung in das Datennetz 103 kann beispielsweise auf einem Paketdatendatendienst basieren, der als GPRS oder EGPRS ausgestaltet sein kann, wenn die Mobilfunknetze 101, 102 als GSM- bzw. EDGE-Netze ausgestaltet sind (GSM: Global System for Mobile Communications; EDGE: Enhanced Data Rates for GSM Evolution). Sofern die Mobilfunknetze 101, 102 als UMTS-Netze ausgestaltet sind, kann der Datendienst den UMTS-Paketdatendienst oder HSDPA bzw. HSPA nutzen. Gleichfalls kann es sich bei den Mobilfunknetzen 101, 102 beispielsweise auch um SAE/LTE-Netze handeln, in denen entsprechende Paketdatendienste bereitgestellt werden (SAE: System Architecture Evolution, LTE: Long Term Evolution).

In der Figur 1 sind beispielhaft zwei Endgeräte 104, 105 dargestellt, denen jeweils das erste Mobilfunknetz 101 als Heimatnetz (HPLMN) zugeordnet ist. Dies bedeutet, dass die Endgeräte 104, 105 in dem HPLMN 101 registriert sind und die Nutzer der Endgeräte 104, 105 in dem HPLMN 101 als Teilnehmer geführt werden. Dies geschieht üblicherweise aufgrund eines Vertrages zwischen den Nutzern und dem Betreiber des HPLMN 101. Die Registrierung der Endgeräte 104, 105 erfolgt insbesondere unter einer den Endgeräten 104, 105 eindeutig zugeordneten Identifikationskennung, die als IMSI (International Mobile Subscriber Identity) ausgestaltet sein kann, sowie einer der Identifikationskennung zugeordneten MSISDN (Mobile Subscriber Integrated Services Digital Network Number), die auch als Rufnummer eines Endgeräts 104, 105 dient. Innerhalb der Endgeräte 104, 105 sind Identifikationsdaten in einem Teilnehmeridentifizierungsmodul hinterlegt, das verwendet wird, um die Endgeräte 104, 105 an einem Mobilfunknetz 101, 102 anzumelden. Die Teilnehmeridentifizierungsmodule sind üblicherweise als eine Chipkarte ausgeführt bzw. in einer Chipkarte enthalten, die in das entsprechende Endgerät 104, 105 eingesetzt wird und werden von dem Betreiber des HPLMN 101 ausgegeben. Im Zusammenhang mit GSM-Netzen sind die Teilnehmeridentifizierungsmodule beispielsweise als SIM ausgestaltet und im Zusammenhang mit UMTS-Netzen als USIM (SIM: Subscriber Identification Module; USIM: Universal Subscriber Identification Module).

Zur Herstellung einer paketorientierten Verbindung in das Datennetz 103, bucht sich ein Endgerät 104, 105 in den Paketdatendienst des Mobilfunknetzes 101, 102 ein und für das Endgerät 104, 105 wird ein Routingkontext aufgebaut, um dem Endgerät 104, 105 Datenpakte zuleiten zu können. Zu diesem Zweck wird dem Endgerät 104, 105 innerhalb des Routingkontextes, der auch als PDP-Kontext bezeichnet wird (PDP: Packet Data Protocol), vorzugsweise eine IP-Adresse zugeordnet, die zur Adressierung von Datenpaketen an das Endgerät 104, 105 verwendet werden kann.

Das Endgerät 104, das in der beispielhaft in der Figur 1 dargestellten Situation mit dem HPLMN 101 verbunden ist, übermittelt zur Aktivierung des Routingkontextes eine entsprechende Verbindungsanforderung an das HPLMN 101. Die Verbindungsanforderung kann bereits ein Ziel im Datennetz 103 angeben, zu dem eine Verbindung aufgebaut werden soll und das in der Verbindungsanforderung anhand seiner IP-Adresse oder einer der IP-Adresse zuordenbaren URL (Uniform Ressource Locator) identifiziert werden kann. Insbesondere kann die Verbindungsanforderung bereits den Aufruf einer von einem bestimmten Server bereitgestellten Webseite oder eine Aufforderung an einen E-Mail-Server zum Senden oder Abrufen einer oder mehrere E-Mails unter einem bestimmten E-Mail-Konto beinhalten.

In dem **HPLMN** 101 wird die Verbindungsanforderung des Endgeräts 104 in einer Eingangsvermittlungseinheit 106 empfangen, in deren Versorgungsbereich sich das Endgerät 104 befindet. Die Eingangsvermittlungseinheit 106, die vorzugsweise als SGSN (Serving GPRS Support Node) ausgeführt ist, ist insbesondere dafür zuständig, von dem Endgerät 104 erhaltene Daten in einer an sich bekannten Weise an nachfolgende Netzknoten weiterzuleiten und umgekehrt. Die Eingangsvermittlungseinheit 106 meldet die Verbindungsanforderung des Endgeräts 104, 105 an eine weitere Vermittlungseinheit 107 des HPLMN 101, die als ein GGSN (Gateway GPRS Support Node) ausgestaltet sein kann. Im Allgemeinen enthält ein Mobilfunknetz 101, 102 eine Mehrzahl derartiger weiterer Vermittlungseinheiten 107. Die Auswahl der Vermittlungseinheit 107 für die Bearbeitung der Anforderung des Endgeräts 104 erfolgt in einem solchen Fall aufgrund einer entsprechenden Adressierung, die durch das Endgerät 104 vorgenommen wird und in der Verbindungsanforderung enthalten ist. Für die Adressierung kann ein der Vermittlungseinheit 107 zugeordneter, sogenannter APN (Access Point Name) verwendet werden, der in dem Endgerät 104 hinterlegt ist.

Die weitere Vermittlungseinheit 107 prüft durch eine Anfrage bei einer mit der Vermittlungseinheit 107 verbundenen Steueranordnung 108, ob Nutzer des Endgeräts 104 berechtigt ist, den Datendienst für den Aufbau einer Datenverbindung in das Datennetz 103 zu nutzen. Nach einem entsprechenden Steuerbefehl der Steueranordnung 108, dass der Nutzer den Datendienst nutzen kann, erfolgt dann die Freischaltung der Datenverbindung über die Vermittlungseinheit 107 in das Datennetz 103. In einer Ausführungsform baut die Vermittlungseinheit 107 aufgrund der Bestätigung der Steueranordnung 108 den Routingkontext für das Endgerät 104 auf, der dann für den Datenaustausch zwischen dem Endgerät 104 und dem Datennetz 103 genutzt werden kann. Gleichfalls kann es jedoch auch vorgesehen sein, dass der Routingkontext bereits aufgrund der Meldung der Verbindungsanforderung an die Vermittlungseinheit 107 aufgebaut und zunächst für den Datenaustausch blockiert bleibt. Eine Freischaltung des Routingkontextes für den Datenaustausch zwischen dem Endgerät 104 und dem Datennetz 103 erfolgt dann aufgrund des Befehls der Steueranordnung 108.

Wenn die Verbindungsanforderung wie zuvor beschrieben, bereits ein Ziel im Datennetz 103 spezifiziert, dann wird nach der Herstellung des Routingkontextes bzw. seiner Freischaltung eine entsprechende Verbindungsanfrage von der Vermittlungseinheit 107 an das Datennetz 103 und dort zu dem angegebenen Ziel weitergeleitet. Damit brauchen von dem Endgerät 104 nicht mehrere Anforderungen zur Freischaltung der Datenverbindung und für den Verbindungsaufbau zu einem bestimmten Ziel übermittelt zu werden.

Das in Figur 1 dargestellte Endgerät 105 ist nicht mit dem HPLMN 101 verbunden, sondern mit einem besuchten Mobilfunknetz (VPLMN) 102, das mit dem HPLMN 101 gekoppelt ist. Verbindungsanforderungen des Endgeräts 105 werden in einer Eingangsvermittlungseinheit 109 des VPLMN 102 empfangen, die vorzugsweise ebenfalls als SGSN ausgestaltet ist. Aufgrund des von dem Endgerät 105 mitgeteilten APN meldet die Eingangsvermittlungseinheit 109 des VPLMN 102 die Verbindungsanforderung an die Vermittlungseinheit 107 des HPLMN 101. Diese behandelt die Verbindungsanforderung dann grundsätzlich so wie die Verbindungsanforderung des mit dem HPLMN 101 verbundenen Endgeräts 104 und schaltet die Datenverbindung in der zuvor beschriebenen Weise nach einer Anfrage bei der Steueranordnung 108 frei. Die Verbindung zwischen der Eingangsvermittlungseinheit 109 des VPLMN 102 und der Vermittlungseinheit 107 des HPLMN 101 wird in einer Ausgestaltung über ein in der Figur nicht gezeigtes Backbone-Netz hergestellt, das beispielsweise als GRX ausgestaltet sein kann (GRX: GPRS Roaming Exchange).

Eine Ausführungsform der Steueranordnung 108 ist in der Figur 1 dargestellt. Hierbei verfügt die Steueranordnung 108 über eine mit der Vermittlungseinheit 107 verbundene Steuereinheit 201, die beispielsweise als ein AAA-Server ausgestaltet sein kann (AAA: Authentication, Authorization, Accounting). Die Kommunikation zwischen der Steuereinheit 201 und der Vermittlungseinheit 107 erfolgt in diesem Fall über ein geeignetes AAA-Protokoll, wie beispielsweise das bekannte RADIUS-Protokoll (RADIUS: Remote Authentication Dial-In User Service). Mit der Steuereinheit 201 ist in der dargestellten Ausgestaltung eine Verwaltungseinheit 202 verbunden. Zudem umfasst die Steueranordnung 108 eine Nutzerdatenbank 203, in der Berechtigungen der dem HPLMN 101 zugeordneten Nutzer zur Nutzung des Datendienstes hinterlegt sind, und eine Buchungseinheit 204.

Wenn der Vermittlungseinheit 107 eine Verbindungsanforderung von einem mit dem HPLMN 101 verbundenen Endgerät 104 oder einem mit dem VPLMN 102 verbundenen Endgerät 105 gemeldet wird, dann richtet dieses eine Anfrage über die Berechtigung des Nutzers an die Steuereinheit 201. Die Anfrage umfasst zumindest eine Identifizierung des Endgeräts 104, 105 bzw. des Nutzers sowie ein Identifizierungsmerkmal der Eingangsvermittlungseinheit 106, 109. Die Identifizierung des Endgeräts 104, 105 kann anhand eines Identifizierungsmerkmals erfolgen, das in der Verbindungsanforderung enthalten ist. Dabei kann es sich um die dem Endgerät 104, 105 zugeordnete und als MSISDN ausgestaltete Rufnummer oder eine andere dem Endgerät 104, 105 über das Teilnehmeridentifikationsmodul zugeordnete Kennung handeln. Bei dem Identifizierungsmerkmal der Eingangsvermittlungseinheit 106, 109 kann es sich um ihre IP-Adresse handeln, die mit der Verbindungsanforderung des Endgeräts 104, 105 an die Vermittlungseinheit 107 gesendet wird.

Nachdem die Steuereinheit 201 die Anfrage der Vermittlungseinheit 107 erhalten hat, werden Bedingungen für die Freischaltung der Datenverbindung in das Datennetz 103 ermittelt. Diese richten sich zum einen nach dem Mobilfunknetz 101, 102, mit dem das die Datenverbindung anfordernde Endgerät 104, 105 verbunden ist, und zum anderen nach dem Vertrag zwischen dem Nutzer und dem Betreiber des HPLMN 101. Die Vertragsbedingungen für den Nutzer sind in der Nutzerdatenbank 203 hinterlegt und können unter Verwendung der Identifizierung des Endgeräts 104, 105 in der Nutzerdatenbank 203 abgerufen werden. Anhand der Vertragsbedingungen wird dann ermittelt, ob für den Nutzer ein Vertragstyp vorliegt, der ihn zur Nutzung des Datendienstes berechtigt.

Das Mobilfunknetz 101, 102, mit dem das die Datenverbindung anfordernde Endgerät 104, 105 verbunden ist, wird anhand der IP-Adresse der Eingangsvermittlungseinheit 106, 109 ermittelt. Zu diesem Zweck ist in der Steuereinheit 201 bzw. einer weiteren mit der Steuereinheit 201 verbundenen Datenbank eine Zuordnung zwischen Mobilfunknetzen 101, 102 und IP-Adressen von Eingangsvermittlungseinheiten 106, 109 gespeichert, von denen Verbindungsanforderungen an die Vermittlungseinheit 107 weitergeleitet werden können. Dabei können IP-Adressen von Vermittlungseinheiten 106, 107, 109 eines bestimmten Mobilfunknetzes 101, 102 jeweils einem dem Mobilfunknetz 101, 102 zugeordneten Nummernkreis entnommen sein. Hierdurch müssen innerhalb der Zuordnung keine einzelnen IP-Adressen von in Frage kommenden Eingangsvermittlungseinheiten 106, 109 angegeben werden, sondern lediglich Nummernkreise, denen die IP-Adresse einer bestimmten Eingangsvermittlungseinheit 106, 109 jeweils zuordenbar ist. Anhand der von der Vermittlungseinheit 107 übermittelten IP-Adresse der Eingangsvermittlungseinheit 106, 109 wird in dieser Ausgestaltung zunächst ein Nummernkreis ermittelt, dem die IP-Adresse angehört. Dann wird das dem Nummernkreis zugeordnete Mobilfunknetz 101, 102 bestimmt.

Die Freischaltung einer Datenverbindung in das Datennetz 103 für ein Endgerät 104, 105 erfolgt vorzugsweise für einen vorgegebenen Zeitraum oder bis ein vorgegebenes Datenvolumen verbraucht worden ist. Daher umfassen die Freischaltbedingungen einen oder mehrere Zeiträume und/oder ein oder mehrere Datenvolumina, denen jeweils eine zu entrichtende Freischaltgebühr zugeordnet ist. Die möglichen Zeiträume und/oder Datenvolumina sowie die zugehörigen Gebühren ergeben sich aus dem Vertragstyp des Nutzers sowie dem Mobilfunknetz 101, 102, mit dem das Endgerät 104, 105 des Nutzers aktuell verbunden ist. Mobilfunknetze 101, 102 können hierzu jeweils einer von mehreren Roamingklassen zugeordnet sein, denen jeweils vorgegebene Freischaltbedingungen zugeordnet sind.

Nachdem die Freischaltbedingungen ermittelt worden sind, wird eine Nachricht mit den Freischaltbedingungen in der Steuereinheit 201 erzeugt und an das Endgerät 104, 105 gesendet. Die Übermittlung der Nachricht wird in einer Ausgestaltung von der Steuereinheit 201 initiiert. Die Adressierung der Nachricht kann dabei anhand der MSISDN des Endgeräte 104, 105 erfolgen, die von der Vermittlungseinheit 107 an die Steuereinheit 201 übergeben oder anhand einer weiteren von der Vermittlungseinheit 107 an die Steuereinheit 201 übergebenen Kennung in der Nutzerdatenbank 203 abgefragt wird.

Die Nachricht wird unabhängig von der aufzubauenden Datenverbindung in das Datennetz 103 an das Endgerät 104, 105 übermittelt. D.h. insbesondere, dass der für den Aufbau der Datenverbindung herzustellende Routingkontext nicht zur Übermittlung der Nachricht verwendet wird. Dies erlaubt es, den Routingkontext erst später herzustellen. Zudem fallen zunächst keine Gebühren für die Nutzung der Datenverbindung bzw. des Routingkontextes an, die insbesondere dann, wenn das Endgerät 105 mit dem VPLMN 102 verbunden ist, regelmäßig relativ hoch sind.

In einer Ausgestaltung wird die Nachricht als SMS-Nachricht an das Endgerät 104, 105 übermittelt. Hierzu ist die Steuereinheit 201 mit einem SMS Service Center (SMSC) 110 des HPLMN 101 verbunden, an das die Steuereinheit 201 die Nachricht für die Übermittlung an das Endgerät 104, 105 übergibt. Von dem SMSC 110 aus kann die Nachricht über den leitungsvermittelnden Teil des HPLMN 101 und ggf. des VPLMN 102 an das Endgerät 104, 105 übermittelt werden. Die Nachricht wird in diesem Fall über eine oder mehrere Vermittlungseinheiten 111, 112 des HPLMN 101 und/oder des VPLMN 102 an das Endgerät 104, 105 übermittelt. die Vermittlungseinheiten 111, 112 können insbesondere als MSCs ausgestaltet sein (MSC: Mobile Switching Centre). Gleichfalls kann jedoch auch, wie beim SMS üblich, eine Übermittlung der Nachricht über den paketvermittelnden Teil des HPLMN 101 und ggf. des VPLMN 102 vorgesehen sein.

Vorteilhaft wird die Übermittlung von SMS-Nachrichten in der Regel von den bestehenden Mobilfunknetzen 101, 102 unterstützt, so dass die Nachricht bei Nutzung des SMS problemlos auch über besuchte Mobilfunknetze 102 an ein Endgerät 105 zugestellt werden kann. Zudem unterstützen Endgeräte 104, 105 in der Regel den SMS, und der SMS kann in der Regel von allen Mobilfunkteilnehmern ohne eine spezielle Freischaltung bzw. einen bestimmten Vertragstyp genutzt werden. Damit kann bei Verwendung des SMS sichergestellt werden, dass die Nachricht auch problemlos von dem Endgerät 104, 105 empfangen werden kann. Hinzu kommt, dass das Empfangen und Senden von SMS-Nachrichten für einen Mobilfunkteilnehmer auch dann mit relativ geringen Kosten verbunden ist, wenn er sich in einem besuchten Mobilfunknetz 102 aufhält. Ferner wird für den Empfang, die Darstellung und den Versand von Nachrichten keine spezielle Software benötigt, wie beispielsweise ein Webbrowser, so dass eine solche Software zur Freischaltung nicht gestartet zu werden braucht und eine Freischaltung der Datenverbindung auch mithilfe von Endgeräten vorgenommen werden kann, die nicht über eine derartige Software verfügen (bei denen die Datenverbindung beispielsweise lediglich für den Abruf und/oder Versand von E-Mails verwendet wird).

Wenn die Nachricht in dem Endgerät 104, 105 empfangen worden ist, wird sie in der dem Fachmann an sich bekannten Weise an dem Endgerät 104, 105 zur Darstellung gebracht, so dass der Nutzer des Endgeräts 104, 105 die ermittelten Freischaltbedingungen einsehen kann. Wenn der Nutzer die Freischaltung der Datenverbindung wünscht, dann erzeugt er mittels seines Endgeräts 104, 105 eine Antwortnachricht, die vorzugsweise über denselben Dienst an das HPLMN 101 zurückgesendet wird, über den auch die Nachricht an das Endgerät 104, 105 gesendet worden ist. Wenn es sich bei der Nachricht, wie zuvor beschrieben, um eine SMS-Nachricht handelt, wird die Antwortnachricht somit vorzugsweise ebenfalls als SMS-Nachricht gesendet. Die Zieladresse, an welche die Antwortnachricht gesendet werden soll, ist vorzugsweise in der zuvor erhaltenen Nachricht angegeben und kann automatisch aus dieser übernommen werden.

Sofern die Freischaltbedingungen lediglich einen einzigen Zeitraum oder ein einziges Datenvolumen beinhalten, das der Nutzer buchen kann, enthält die Antwortnachricht eine entsprechende Bestätigung. Umfassen die Freischaltbedingungen hingegen mehrere Zeiträume und/oder Datenvolumina, kann der Nutzer aus diesen eine Auswahl vornehmen. Die Auswahl wird ebenfalls in der Antwortnachricht spezifiziert. Hierzu kann es beispielsweise vorgesehen sein, dass den unterschiedlichen Auswahlmöglichkeiten jeweils eine Ziffer zugeordnet ist und dass die Ziffer des von dem Nutzer ausgewählten Zeitraums oder Datenvolumens in die Antwortnachricht eingebracht wird.

Die Antwortnachricht wird über das HPLMN 101 und ggf. über das VPLMN 102, wenn sich das Endgerät 105 dort aufhält, an eine Buchungseinheit 204 übermittelt, die in der Steueranordnung 108 enthalten ist. Die Buchungseinheit 204 wertet die Antwortnachricht aus und prüft, ob darin eine der möglichen Freischaltbedingungen bestätigt wird. Dann wird ein Bezahl- bzw. Buchungsvorgang bezüglich der in den bestätigten Freischaltbedingungen enthaltenen Gebühren vorgenommen. Dies geschieht vorzugsweise in der Weise, dass die Gebühren über die von dem Betreiber des HPLMN 101 für den Nutzer erstellte Mobilfunkrechnung abgerechnet wird. Hierzu werden die Freischaltbedingungen einschließlich der enthaltenen Gebühren vorzugsweise von der Steuereinheit 201 an die Buchungseinheit 204 übergeben. Wenn die Freischaltbedingungen mehrere wählbare Zeiträume und/oder Datenvolumina vorsehen, dann ermittelt die Buchungseinheit 204 die abzurechnenden Gebühren anhand der in der Antwortnachricht spezifizierten Auswahl des Nutzers.

Nachdem der Buchungsvorgang abgeschlossen worden ist, meldet die Buchungseinheit 204 die von dem Nutzer bestätigten bzw. ausgewählten Freischaltbedingungen unter Angabe des Endgeräts 104, 105 an die Verwaltungseinheit 202 der Steueranordnung 108. Die Verwaltungseinheit 202 ist in der Lage, die Steuereinheit 201 dazu zu instruieren, Steuerbefehle an die Vermittlungseinheit 107 zu senden. Ferner kann es vorgesehen sein, dass der Verwaltungseinheit 202 die über die Vermittlungseinheit 107 übermittelten Datenvolumina für die mit der Vermittlungseinheit 107 über das HPLMN 101 und das VPLMN 102 verbundenen Endgeräte 104, 105 gemeldet werden. Dies ist insbesondere dann vorgesehen, wenn die Freischaltbedingungen der Datenverbindung in das Datennetz 103 vorgegebenen Datenvolumina umfassen.

Wenn die Verwaltungseinheit 202 die Freischaltbedingungen erhält, weist sie die Steuereinheit 201 an, einen Steuerbefehle zur Freischaltung der Datenverbindung in das Datennetz 103 für das Endgerät 104, 105 an die Vermittlungseinheit 107 zu senden. Die Vermittlungseinheit 107 schaltet für das Endgerät 104, 105 die Datenverbindung in das Datennetz 103 nach Empfang des Steuerbefehls frei. Hierzu wird zunächst der Routingkontext für das Endgerät 104, 105 hergestellt, wenn dies nicht bereits bei Erhalt der Verbindungsanforderung von dem Endgerät 104, 105 geschehen ist. Dann wird dem Endgerät 104, 105 die Nutzung des Routingkontextes gestattet. Das bedeutet, dass über den Routingkontext Daten zwischen dem Endgerät 104, 105 und dem Datennetz 103 ausgetauscht werden können. Zunächst wird vorzugsweise eine Verbindung zu dem Ziel im Datennetz 103 hergestellt, das in der von dem Endgerät 104, 105 gesendeten Verbindungsanforderung spezifiziert ist. Auf diese Weise braucht von dem Endgerät 104 das gewünschte Ziel nicht separat von der Initiierung der Freischaltung aufgerufen werden.

Falls die Freischaltbedingungen einen Zeitraum für die Nutzung des Datendienstes vorsehen, wird in der Verwaltungseinheit 202 bei Freischaltung der Datenverbindung ein Timer gestartet, mit dem der Ablauf des Zeitraums ermittelt wird. Wenn mittels des Timers festgestellt worden ist, dass der von dem Nutzer gebuchte Zeitraum abgelaufen ist, wird der Datendienst für das Endgerät 104, 105 wieder gesperrt. Hierzu instruiert die Verwaltungseinheit 202 die Steuereinheit 201, einen entsprechenden Steuerbefehl an die Vermittlungseinheit 207 zu übermitteln. Diese leitet nach Empfang des Steuerbefehls keine an das Endgerät 104, 105 adressierten oder von dem Endgerät 104, 105 gesendeten Datenpakete mehr weiter. Zudem kann die Vermittlungseinheit 107 den Routingkontext für das Endgerät 104, 105 abbauen.

Wenn die Freischaltbedingungen ein bestimmtes Datenvolumen umfassen, wird in der Verwaltungseinheit 202 anhand der entsprechenden Meldungen der Steuereinheit 201 das Datenvolumen protokolliert bzw. aufsummiert. Hierbei kann es sich um das an das Endgerät 104, 105 übermittelte Downlink-Datenvolumen, um das von dem Endgerät 104, 105 gesendete Uplink-Datenvolumen oder um das Gesamtdatenvolumen, d.h. die Summe aus Downlink- und Uplink-Datenvolumen handeln. Wenn die Verwaltungseinheit 202 feststellt, dass das Datenvolumen den von dem Nutzer gebuchten Wert erreicht hat, wird die Datenverbindung in das Datennetz 103 für das Endgerät 104, 105 gesperrt. Dies geschieht in der gleichen Weise wie bei Ablauf eines von dem Nutzer gebuchten Zeitraums für die Nutzung der Datenverbindung in das Datennetz 103.

Bei den zuvor beschriebenen Ausgestaltungen ist vorgesehen, dass die Freischaltung der Datenverbindung im Roamingfall und bei einer direkten Verbindung zum HPLMN 101 in der gleichen Weise durch eine Antwortnachricht des Nutzers auf eine die Freischaltbedingungen enthaltene Nachricht erfolgt. Alternativ kann es jedoch vorgesehen sein, dass dies nur dann vorgesehen ist, wenn festgestellt wird, dass das Endgerät 105 mit dem VPLMN 102 verbunden ist. Wenn hingegen ermittelt wird, dass das die Datenverbindung anfordernde Endgerät 104 direkt mit dem HPLMN 101 verbunden ist, kann die Datenverbindung in das Datennetz 103 beispielsweise bereits aufgrund des Empfangs der Verbindungsanforderung in der Vermittlungseinheit 107 freigeschaltet werden. Die Freischaltung kann in diesem Fall nach Maßgabe der von dem Betreiber des HPLMN 101 mit dem Nutzer vereinbarten Freischaltbedingungen erfolgen, ohne dass diese dem Nutzer vor der Freischaltung angezeigt werden. Gleichfalls kann es beispielsweise vorgesehen sein, dass dem Nutzer Freischaltbedingungen über den zuvor bereits aufgebauten Routingkontext für die aufzubauende Datenverbindung mitgeteilt werden und der Nutzer, ebenfalls unter Nutzung des Routingkontextes, die Freischaltbedingungen auswählt und/oder bestätigt. Die Freischaltung des Routingkontextes für die Datenverbindung in das Datennetz 103 erfolgt dann aufgrund der Auswahl bzw. Bestätigung des Nutzers.

Obwohl die Erfindung in den Zeichnungen und der vorausgegangenen Darstellung im Detail beschrieben wurde, sind die Darstellungen illustrativ bzw. beispielhaft und nicht einschränkend zu verstehen; insbesondere ist die Erfindung nicht auf die erläuterten Ausführungsbeispiele beschränkt. So kann beispielsweise anstelle des SMS ein anderer Nachrichtendienst für die Übermittlung der Nachricht mit den Freischaltbedingungen an das Endgerät 104, 105 und der Antwortnachricht an die Buchungseinheit 204 verwendet werden. Weitere Varianten der Erfindung und ihre Ausführung ergeben sich für den Fachmann aus der vorangegangenen Offenbarung, den Figuren und den Patentansprüchen.

In den Patentansprüchen verwendete Begriffe wie "umfassen", "aufweisen", "beinhalten", "enthalten" und dergleichen schließen weitere Elemente oder Schritte nicht aus. Die Verwendung des unbestimmten Artikels schließt eine Mehrzahl nicht aus. Eine einzelne Einrichtung kann die Funktionen mehrerer in den Patentansprüchen genannten Einheiten beziehungsweise Einrichtungen ausführen.

In den Patentansprüchen angegebene Bezugszeichen sind nicht als Beschränkungen der eingesetzten Mittel und Schritte anzusehen.

## Patentansprüche

1. Verfahren zum Freischalten einer Datenverbindung von einem mobilen Endgerät (104, 105) über wenigstens ein Mobilfunknetz (101, 102) in ein Datennetz (103), wobei
- eine Verbindungsanforderung des Endgeräts (105) an eine Vermittlungseinheit (107) weitergeleitet wird, wobei dem Endgerät (105) ein Heimatnetz (101) zugeordnet ist und sich die Vermittlungseinheit (107) in dem Heimatnetz (101) befindet, wobei die Verbindungsanforderung von einer Eingangsvermittlungseinheit (109) eines besuchten Mobilfunknetzes (102) an die Vermittlungseinheit (107) des Heimatnetzes (101) weitergeleitet wird,
- aufgrund des Empfangs der Verbindungsanforderung in der Vermittlungseinheit (107) Freischaltbedingungen für eine Freischaltung der Datenverbindung in Abhängigkeit von einem Merkmal der Eingangsvermittlungseinheit (106, 109) bestimmt werden, und
- eine Nachricht mit den Freischaltbedingungen unabhängig von der aufzubauenden Datenverbindung an das Endgerät (105) gesendet wird.

2. Verfahren nach Anspruch 1, wobei die Freischaltbedingungen zusätzlich aufgrund von Vertragsbedingungen zwischen dem Nutzer und einem Betreiber des Heimatnetzes (101) bestimmt werden.

3. Verfahren nach Anspruch 1 oder 2, bei dem die Freischaltung der Datenverbindung erfolgt, nachdem eine von dem Endgerät (105) gesendete Antwortnachricht empfangen worden ist.

4. Verfahren nach Anspruch 1, 2 oder 3, bei dem die Nachricht und/oder die Antwortnachricht über einen von dem Mobilfunknetz (101, 102) bereitgestellten Nachrichtendienst, insbesondere einen Short Message Service, übermittelt werden.

5. Verfahren nach einem der vorangegangenen Ansprüche, wobei die Verbindungsanforderung unter Angabe eines Ziels in dem Datennetz (103) erfolgt, und aufgrund der Freischaltung eine Verbindung von dem Endgerät (105) zu dem Ziel hergestellt wird.

6. Verfahren nach einem der vorangegangenen Ansprüche, wobei die Freischaltbedingungen in Abhängigkeit von dem Mobilfunknetz (102) ermittelt werden, in dem die Verbindungsanforderung des Endgeräts (105) zuerst empfangen wird.

7. Verfahren nach einem der vorangegangenen Ansprüche, bei dem die in der Nachricht angegeben Freischaltbedingungen wenigstens eine Freischaltdauer und/oder ein Freischaltdatenvolumen umfassen.

8. Verfahren nach einem der-Ansprüche 3 - 7, bei dem die Antwortnachricht eine Bestätigung einer Freischaltdauer und/oder eines Freischaltdatenvolumens umfasst und die Freischaltung nach Maßgabe dieser Freischaltdauer und/oder dieses Freischaltdatenvolumens vorgenommen wird.

9. Netzeinrichtung zum Freischalten einer Datenverbindung von einem mobilen Endgerät (105) über wenigstens ein Mobilfunknetz (101, 102) in ein Datennetz (103), umfassend eine Vermittlungseinheit (107), in der eine Verbindungsanforderung des Endgeräts (105) empfangbar ist, wobei dem Endgerät (105) ein Heimatnetz (101) zugeordnet ist und sich die Vermittlungseinheit (107) in dem Heimatnetz (101) befindet, wobei die Verbindungsanforderung von einer Eingangsvermittlungseinheit (106, 109) eines besuchten Mobilfunknetzes (102) an die Vermittlungseinheit (107) des Heimatnetzes (101) weitergeleitet wird, wobei die Netzeinrichtung eine der Vermittlungseinheit (107) zugeordnete Steueranordnung (108) umfasst, die dazu ausgestaltet ist, aufgrund des Empfangs der Verbindungsanforderung in der Vermittlungseinheit (107) Freischaltbedingungen für eine Freischaltung der Datenverbindung in Abhängigkeit von einem Merkmal der Eingangsvermittlungseinheit (106, 109) zu bestimmen und eine von der aufzubauenden Datenverbindung unabhängige Übermittlung einer Nachricht mit den Freischaltbedingungen an das Endgerät (105) zu veranlassen.

10. Netzeinrichtung nach Anspruch 9, wobei die Vermittlungseinheit (107) weiter eingerichtet ist, die Freischaltbedingungen zusätzlich aufgrund von Vertragsbedingungen zwischen dem Nutzer und einem Betreiber des Heimatnetzes (101) zu bestimmen.

## Claims

1. A method for activating a data connection from a mobile terminal device (104, 105) to a data network (103) via at least one mobile telecommunications network (101, 102), wherein
• a connection request from the terminal device (104, 105) is forwarded to a switching unit (107), whereby a home network (101) is associated with the terminal device (105), and the switching unit (107) is located in the home network (101), whereby the connection request is forwarded by a gateway switching unit (109) of a visited mobile telecommunications network (102) to the switching unit (107) of the home network (101),
• activation conditions for activating the data connection are determined on the basis of receipt of the connection request in the switching unit (107) as a function of a feature of the gateway switching unit (106, 109), and
• a message containing the activation conditions is sent to the terminal device (105) independently of the data connection that is to be established.

2. The method according to Claim 1, wherein the activation conditions are additionally determined on the basis of contractual conditions stipulated between the user and an operator of the home network (101).

3. The method according to Claim 1 or 2, wherein the data connection is activated after a response message sent by the terminal device (105) has been received.

4. The method according to Claim 1, 2 or 3, wherein the message and/or the response message are transmitted via a message service provided by the mobile telecommunications network (101, 102), especially a Short Message Service.

5. The method according to one of the preceding claims, wherein the connection request is made by indicating a destination in the data network (103) and, on the basis of the activation, a connection is established from the terminal device (105) to the destination.

6. The method according to one of the preceding claims, wherein the activation conditions are determined as a function of the mobile telecommunications network (102) in which the connection request from the terminal device (105) is first received.

7. The method according to one of the preceding claims, wherein the activation conditions indicated in the message comprise at least one activation duration and/or one activation data volume.

8. The method according to one of claims 3 to 7, wherein the response message contains confirmation of an activation duration and/or of an activation data volume, and the activation is carried out in accordance with this activation duration and/or with this activation data volume.

9. A network device for activating a data connection from a mobile terminal device (105) to a data network (103) via at least one mobile telecommunications network (101, 102), comprising a switching unit (107) in which a connection request from the terminal device (105) can be received, whereby a home network (101) is associated with the terminal device (105), and the switching unit (107) is located in the home network (101), whereby the connection request is forwarded by a gateway switching unit (106, 109) of a visited mobile telecommunications network (102) to the switching unit (107) of the home network (101), whereby the network device comprises a control system (108) that is associated with the switching unit (107), said control system (108) being configured to determine activation conditions for activating the data connection on the basis of receipt of the connection request in the switching unit (107) as a function of a feature of the gateway switching unit (106, 109), and to effectuate the transmission of a message containing the activation conditions to the terminal device (105) independently of the data connection that is to be established.

10. The network device according to Claim 9, wherein the switching unit (107) is also configured to additionally determine the activation conditions on the basis of contractual conditions stipulated between the user and an operator of the home network (101).

## Revendications

1. Procédé destiné à autoriser une liaison de données d'un terminal mobile (104, 105) vers un réseau de données (103) via au moins un réseau radio mobile (101, 102),
- une demande de liaison du terminal (105) étant retransmise à une unité de commutation (107), un réseau de rattachement (101) étant associé au terminal (105) et l'unité de commutation (107) se trouvant dans le réseau de rattachement (101), la demande de liaison étant retransmise d'une unité de commutation d'entrée (109) d'un réseau radio mobile visité (102) à l'unité de commutation (107) du réseau de rattachement (101),
- sur la base de la réception de la demande de liaison dans l'unité de commutation (107), des conditions d'autorisation pour une autorisation de la liaison de données étant déterminées en fonction d'une caractéristique de l'unité de commutation d'entrée (106, 109) et
- un message contenant les conditions d'autorisation étant envoyé au terminal (105) indépendamment de la liaison de données à établir.

2. Procédé selon la revendication 1, les conditions d'autorisation étant en outre déterminées sur la base de conditions contractuelles entre l'utilisateur et un exploitant du réseau de rattachement (101).

3. Procédé selon la revendication 1 ou 2, selon lequel l'autorisation de la liaison de données a lieu après la réception d'un message de réponse émis par le terminal (105).

4. Procédé selon la revendication 1, 2 ou 3, selon lequel le message et/ou le message de réponse sont transmis via un service de messagerie fourni par le réseau radio mobile (101, 102), et plus particulièrement un Short Message Service.

5. Procédé selon l'une des revendications précédentes, la demande de liaison s'effectuant avec mention d'une destination dans le réseau de données (103) et, sur la base de l'autorisation, une liaison étant établie du terminal (105) vers la destination.

6. Procédé selon l'une des revendications précédentes, les conditions d'autorisation étant déterminées en fonction du réseau radio mobile (102) dans lequel la demande de liaison du terminal (105) est reçue en premier lieu.

7. Procédé selon l'une des revendications précédentes, selon lequel les conditions d'autorisation indiquées dans le message comprennent au moins une durée d'autorisation et/ou un volume de données autorisé.

8. Procédé selon l'une des revendications 3 à 7, selon lequel le message de réponse comprend une confirmation d'une durée d'autorisation et/ou d'un volume de données autorisé et l'autorisation est effectuée conformément à cette durée d'autorisation et/ou à ce volume de données autorisé.

9. Dispositif de réseau destiné à autoriser une liaison de données d'un terminal mobile (105) vers un réseau de données (103) via au moins un réseau radio mobile (101, 102), comprenant une unité de commutation (107) dans laquelle une demande de liaison du terminal (105) peut être reçue, un réseau de rattachement (101) étant associé au terminal (105) et l'unité de commutation (107) se trouvant dans le réseau de rattachement (101), la demande de liaison étant retransmise d'une unité de commutation d'entrée (106, 109) d'un réseau radio mobile visité (102) à l'unité de commutation (107) du réseau de rattachement (101), le dispositif de réseau comprenant un système de commande (108) associé à l'unité de commutation (107), et qui est conçu pour déterminer, sur la base de la réception de la demande de liaison dans l'unité de commutation (107), des conditions d'autorisation pour une autorisation de la liaison de données en fonction d'une caractéristique de l'unité de commutation d'entrée (106, 109) et pour faire transmettre au terminal (105), indépendamment de la liaison de données à établir, un message contenant les conditions d'autorisation.

10. Dispositif de réseau selon la revendication 9, l'unité de commutation (107) étant en outre aménagée pour déterminer les conditions d'autorisation additionnellement sur la base de conditions contractuelles entre l'utilisateur et un exploitant du réseau de rattachement (101).
